# FASCICULE DE BREVET EUROPEEN

(11) **EP 1 774 533 B1**
(45) Date de publication et mention de la délivrance du brevet: **04.09.2013**
(21) Numéro de dépôt: 05777169.3
(22) Date de dépôt: 16.06.2005
(51) Int. Cl.: G12B 11/00, G01D 11/28

(54) **INDICATEUR A ECRAN ECLAIRE SOUS DES LUMIERES D"AMBIANCE ET D"ALERTE**
MIT EINEM DURCH UMGEBUNGS- UND ALARMLICHT BELEUCHTETEN BILDSCHIRM AUSGESTATTETE ANZEIGE
INDICATOR PROVIDED WIT A SCREEN ILLUMINATED BY AMBIENT AND ALARM LIGHT

(30) Priorité: 23.06.2004 FR 0406827
(43) Date de publication de la demande: 18.04.2007
(73) Titulaire: Johnson Controls Technology Company, Holland, MI 49423 (US)
(72) Inventeur: FOURNIER, Joël, F-95000 Cergy (FR)
(74) Mandataire: Bloch, Gérard
(86) Numéro de dépôt international: PCT/FR2005/001506
(87) Numéro de publication internationale: WO 2006/008369

(56) Documents cités:
- EP-A- 1 278 045
- DE-A1- 10 021 107
- GB-A- 2 237 384

## Description

L'invention concerne un indicateur à écran d'affichage éclairé sous des lumières d'ambiance et d'alerte.

Les tableaux de bord, notamment ceux des véhicules automobiles, comportent de plus en plus fréquemment un écran d'affichage, par exemple un écran du type LCD (Liquid Crystal Display), sur lequel apparaissent des textes ou icônes d'informations pour le conducteur. Cet écran est éclairé par l'arrière par des sources d'éclairage, par exemple des diodes électroluminescentes (LED), réparties en une matrice.

En mode de fonctionnement classique, l'écran est éclairé par des LED fournissant une lumière d'ambiance, par exemple, blanc, bleu ou vert. Toutefois, pour certaines informations, telles que des informations d'alerte, il est souhaitable que l'éclairage change de couleur et devienne, par exemple, orange ou rouge, selon le degré d'alerte.

Afin de permettre de tels changements de couleur d'éclairage, divers dispositifs sont actuellement proposés. On peut utiliser un écran du type TFT (Thin Film Transistor). Ces écrans sont néanmoins très coûteux. On utilise aussi fréquement des LED multicolores, par exemple tricolores - blanc, orange et rouge - dont on fait changer la couleur selon la nature du message affiché sur l'écran. Mais ces LED coûtent chers, en l'espèce dix fois le prix d'une LED monocolore pour une LED tricolore.

On a proposé de placer, à l'arrière de l'écran LCD, une matrice de triplets de LED monocolores de couleurs différentes. Le document DE 100 21 107 A1 utilise par exemple de tels triplets de LED monocolores de couleurs différentes. Des LED blanches sont allumées pour obtenir une lumière d'ambiance et on les éteint pour allumer des LED oranges ou des LED rouges en cas d'alerte. Toutefois, les LED sont directement fixées sur une carte de circuit imprimé située à l'arrière de l'écran, ce qui engendre un double problème d'encombrement. Tout d'abord, un triplet de LED occupant une surface beaucoup plus importante qu'une simple LED, il faut réduire grandement le nombre de LED d'une même couleur, ce qui n'autorise pas un éclairage satisfaisant pour cette couleur. Ensuite, autour de chaque LED, il est nécessaire de ménager, sur la carte de circuit imprimé, une surface de refroidissement ; cette obligation aggrave le problème d'encombrement susmentionné, ses effets étant d'autant plus regrettables du fait de la présence de triplets de LED, dont une seule est utilisée à un instant donné. Le nombre de LED d'une couleur particulière doit être grandement réduit et l'éclairage est insuffisant.

L'invention vise à pallier ces inconvénients et à proposer un dispositif d'éclairage par l'arrière d'un écran d'affichage d'un indicateur dont l'éclairage soit homogène, avec possibilité de changer la couleur de l'affichage, à moindre encombrement et coût.

A cet effet, l'invention concerne un indicateur à écran d'affichage dans une boîte à lumière avec des moyens d'éclairage agencés pour éclairer l'écran par une lumière d'ambiance et une lumière d'alerte, caractérisé par le fait que des moyens d'éclairage d'ambiance sont disposés dans la boîte à lumière et des moyens d'éclairage d'alerte sont déportés, hors de la boîte à lumière, pour éclairer l'écran par un conduit de lumière.

Grâce à l'invention, les moyens d'éclairage d'ambiance disposés dans la boîte à lumière peuvent comprendre des sources individuelles en grande quantité, implantées sur la zone de la carte de circuit imprimé faisant face à l'écran, l'éclairage d'alerte pouvant être fourni par des sources en faible quantité. Ainsi, un éclairage d'écran optimal peut être obtenu avec un encombrement très limité.

De préférence, le conduit de lumière est transparent et s'étend en partie dans la boîte à lumière entre les moyens d'éclairage d'ambiance et l'écran.

Avantageusement, dans ce cas, le conduit de lumière comporte des moyens conformés pour éclater la lumière, en provenance des moyens d'éclairage d'alerte, vers l'écran d'affichage.

De préférence encore, l'écran d'affichage est un écran du type LCD (Liquid Crystal Display).

De préférence toujours, les moyens d'éclairage comprennent des diodes électroluminescentes (LED).

L'invention s'applique particulièrement bien à un indicateur pour tableau de bord de véhicule automobile ou de tout autre moyen de locomotion. Mais la demanderesse n'entend pas limiter la portée de ses droits à cette application.

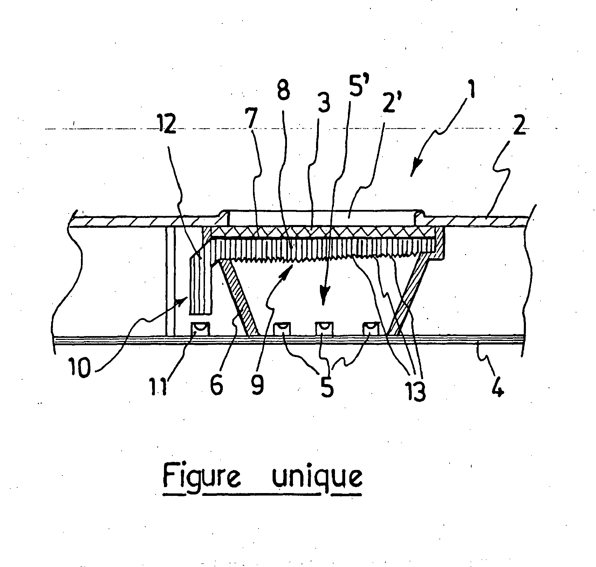

L'invention sera mieux comprise à l'aide de la description suivante de la forme de réalisation préférée de l'indicateur de l'invention, en référence au dessin annexé, sur lequel la figure unique représente une vue en coupe de l'indicateur de l'invention.

L'indicateur 1 ici décrit est un indicateur de tableau de bord d'un véhicule automobile, agencé pour afficher des textes ou icônes d'informations pour le conducteur, telles que des informations sur la vitesse du véhicule, la quantité de carburant restant dans le réservoir, la route à suivre, ...

La façade du tableau de bord 2 comprend un évidement 2' de visualisation d'un écran d'affichage 3 de l'indicateur, qui est en l'espèce un écran de type LCD, plan et de forme rectangulaire. L'évidement 2' est ici comblé par une vitre de protection. L'écran LCD 3 est fixé juste à l'arrière de la façade du tableau de bord 2, la majeure partie de sa surface avant s'étendant sous la vitre de protection et étant donc visible par le conducteur. L'écran LCD 3 est agencé pour afficher des textes ou des icônes, commandé par le circuit imprimé 4, de façon connue de l'homme du métier, qui ne sera pas détaillée.

On considérera dans la suite que l'avant est le côté par lequel le conducteur, ou plus généralement l'observateur de l'indicateur, regarde ce dernier.

Parallèlement à l'écran LCD 3 et à l'arrière de celui-ci, s'étend la carte de circuit imprimé 4. Sur la carte de circuit imprimé 4, au droit de l'écran LCD 3, dans une boîte à lumière 6, sont fixées mécaniquement et électriquement des sources d'éclairage d'ambiance 5, en l'espèce des diodes électroluminescentes (LED) 5. Ces LED d'ambiance 5 sont ici de couleur blanche. Leur fonction est d'éclairer l'écran LCD 3 par l'arrière en mode qualifié de "normal", c'est-à-dire pour l'affichage d'informations classiques ou basiques. Les LED 5 d'ambiance sont réparties en une matrice 5', située au droit de l'écran LCD 3, comprenant ici trois rangées parallèles de LED 5.

Entre l'écran LCD 3 et la carte de circuit imprimé 4, autour de la matrice 5', s'étend la cloison formant la boîte à lumière 6. Sa section va ici en décroissant vers l'arrière, depuis l'écran LCD 3 vers la carte de circuit imprimé 4. Un filtre d'homogénéisation 7 est fixé sur la face arrière de l'écran LCD 3 ; sa fonction est d'homogénéiser la lumière éclairant l'écran 3 par l'arrière, afin que celle-ci éclaire l'écran de façon homogène, même si les sources de lumière sont des sources discrètes. Le filtre d'homogénéisation 7 est de forme, en vue arrière, identique à celle de l'écran 3, donc ici de forme rectangulaire, et se trouve à l'intérieur de la boîte à lumière 6.

Sur la face arrière du filtre 7 est fixé un conduit de lumière transparent 8, en forme de L en vue en coupe selon l'une de sa largeur ou de sa longueur, ici de sa largeur. La face avant de la portion 9 formant la grande barre du L épouse la face arrière du filtre 7. C'est selon la largeur de cette portion 9 qu'est effectuée la coupe de la figure unique. Son épaisseur va en croissant depuis l'extrémité opposée à la portion 10 formant la petite barre du L jusqu'à l'extrémité proche de cette portion 10.

La portion 9 formant la grande barre du L et la portion 10 formant la petite barre du L seront ci-après nommées grande portion 9 et petite portion 10, respectivement. La grande portion 9 forme globalement une plaque rectangulaire épousant la forme du filtre d'homogénéisation 7 et s'étendant dans la boîte à lumière 6, tandis que la petite portion 10 forme globalement une plaque rectangulaire dont la longueur est celle de la grande portion 9 et s'étend hors de la boîte à lumière 6.

La petite portion 10 s'étend perpendiculairement à la grande portion 9, donc peipendiculairement à la carte de circuit imprimé 4. Au droit de cette petite portion 10, à l'arrière, c'est-à-dire de son côté libre, sont fixées mécaniquement et électriquement, sur la carte de circuit imprimé 4, des sources de lumière d'alerte 11, en l'espèce des LED d'alerte 11. Ces LED d'alerte 11 sont disposées de façon déportée par rapport à la zone située au droit de l'écran LCD 3, en dehors de la boîte à lumière 6, et le conduit de lumière 8 est agencé de façon à ce que sa petite portion 10 se situe au droit de ces LED d'alerte 10.

Entre sa petite portion 10 et sa grande portion 9, le conduit de lumière 8 comprend une portion 12 à pans inclinés assurant la jonction entre les deux portions 9, 10. Les pans de cette portion inclinée 12 sont ici inclinés à 45° par rapport aux faces perpendiculaires des portions 9, 10 formant les barres du L. La fonction de cette portion inclinée 12 est de diriger la lumière provenant des LED d'alerte 11 depuis la petite portion 10 vers la grande portion 9.

Les LED d'alerte 11 sont ici de couleur rouge ou orange, disposées suivant une seule rangée parallèle aux trois rangées des LED d'ambiance 5. Le long de cette rangée, il y a alternance entre une LED d'alerte 11 rouge et une LED d'alerte 11 orange.

La face arrière de la grande portion 9 du conduit de lumière 8 comporte une structure 13 dont la fonction est d'éclater la lumière, notamment la lumière provenant de l'intérieur du conduit 8, en particulier la lumière provenant des LED d'alerte 11 par la petite portion 10 via la portion inclinée 12. Cette structure 13 est ici une structure en pointes de diamants 13.

Le fonctionnement de l'indicateur 1 va maintenant être expliqué plus en détails.

En mode de fonctionnement "normal", c'est-à-dire lorsque les informations qui apparaissent sur l'écran LCD 3 sont des informations classiques qui ne méritent pas particulièrement d'être relevées, l'écran LCD 3 est éclairée par les LED d'ambiance 5 blanches. La lumière qu'elles émettent est dirigée dans la boîte à lumière 6 en direction de la face arrière de la grande portion 9 du conduit de lumière 8 ; ce conduit 8 est transparent, donc la lumière passe à travers, est homogénéisée par le filtre d'homogénéisation 7 et éclaire l'écran LCD 3 par l'arrière.

En mode de fonctionnement "d'alerte", c'est-à-dire lorsque les informations qui apparaissent sur l'écran LCD 3 revêtent une importance particulière qui mérite d'être relevée, l'écran LCD 3 est éclairé par les LED d'alerte 11. Les informations qualifiées "d'alerte" sont par exemple du type de celles qui préviennent le conducteur d'une vitesse excessive, d'un remplissage insuffisant du réservoir de carburant, d'une panne d'un organe du véhicule, ...

La lumière émise par les LED d'alerte 11 entre dans le conduit de lumière 8 par l'extrémité libre de sa petite portion 10, placée à proximité des LED d'alerte 11 ; elle est conduite dans cette portion 10, est réfléchie dans la portion inclinée 12 en direction de la grande portion 9, dans laquelle elle se propage ; elle y est réfléchie et éclatée sur les pointes de diamant 13 en direction du filtre d'homogénéisation 7, où elle est homogénéisée afin d'éclairer l'écran LCD 3 par l'arrière, de façon homogène.

Du fait du rétrécissement de l'épaisseur de la grande portion 9 en s'éloignant de la petite portion 10, c'est-à-dire dans le sens de propagation de la lumière provenant de la petite portion 10, la lumière est bien réfléchie et éclatée vers le filtre d'homogénéisation 7.

On peut noter que la lumière provenant des LED d'alerte 11 peut être éclatée par des pointes de diamants 13. Elle pourrait l'être aussi, par exemple, par des stries s'étendant sur la grande portion 9 du conduit de lumière 8, transversalement à la direction de propagation de la lumière provenant de sa petite portion 10.

En fonction du degré de l'alerte, ce sont les LED d'alerte 11 de couleur orange ou rouge qui sont allumées. Lorsque les LED d'alerte 11 sont allumées, il est possible, soit d'éteindre les LED d'ambiance 5, soit de les laisser allumées. Cette dernière solution est préférable, car alors les LED d'ambiance 5 assurent une meilleure luminosité, leur puissance pouvant éventuellement être baissée, tandis que les LED d'alerte 5 assurent la coloration de la lumière d'éclairage, et donc d'affichage, de l'écran LCD 3 ; dans ce cas de figure, il est possible de minimiser le nombre de LED d'alerte 11 d'une couleur particulière et de solutionner de façon d'autant plus flagrante le problème posé plus haut.

C'est le circuit imprimé de la carte 4 qui assure l'enchaînement et la coordination de l'allumage des diverses sources d'éclairage 5, 11 en fonction de la nature du message devant apparaître sur l'écran LCD 3.

L'invention a été décrite en relation avec des sources de lumière d'alerte déportées et disposées selon une rangée, avec alternance de LED de deux couleurs différentes. Il va de soi qu'une multitude d'autres configurations sont possibles; quelques-unes vont être énumérées à titre d'exemples.

Il peut n'y avoir qu'une seule couleur de LED d'alerte, toutes alignées selon une rangée. Il peut y avoir deux rangées parallèles de LED d'alertes, par exemple une rangée d'une couleur et une rangée d'une autre couleur, ou alors deux rangées dans lesquelles alternent les deux couleurs, les deux rangées étant décalées l'une par rapport à l'autre quant à cette alternance. On peut prévoir une seule rangée de LED bicolores, dont on change la couleur en fonction de la nature de l'alerte. On peut prévoir plus de deux couleurs pour les LED d'alerte.

L'invention a été décrite en relation avec un écran LCD rectangulaire, mais il va de soi qu'il pourrait être carré, rond, ovale, ... Les autres organes de l'indicateur sont alors adaptés à cet écran.

En outre, le conduit de lumière a été décrit comme présentant une vue en coupe en forme de L avec une portion à pans inclinés, mais il va de soi que la portion à pans inclinés pourrait être remplacée par une portion courbe, que la section pourrait ne pas être en L, ... L'essentiel est que le conduit assure sa fonction de conduction de la lumière depuis les sources d'éclairage déportées vers l'écran d'affichage.

## Revendications

1. Indicateur à écran d'affichage (3) dans une boîte à lumière (6) et moyens d'éclairage (5, 11) agencés pour éclairer l'écran (3) par une lumière d'ambiance et une lumière d'alerte, **caractérisé par le fait que** des moyens d'éclairage d'ambiance (5) sont disposés dans la boîte à lumière (6) et des moyens d'éclairage d'alerte (11) sont déportés hors de la boîte à lumière (6), pour éclairer l'écran (3) par un conduit de lumière (8), ledit conduit de lumière (8) étant transparent et une portion (9) s'étendant dans la boîte à lumière (6) entre les moyens d'éclairage d'ambiance (5) et l'écran (3), ledit conduit de lumière (8) comportant des moyens (13) conformés pour éclater la lumière, en provenance des moyens d'éclairage d'alerte déportés (11), vers l'écran d'affichage (3).

2. Indicateur selon la revendication 1, dans lequel les moyens conformés pour éclater la lumière comprennent une structure (13) agencée sur la face arrière de la portion (9) du conduit de lumière (8) s'étendant dans la boîte à lumière (6).

3. Indicateur selon l'une des revendications 1 ou 2, dans lequel l'écran d'affichage (3) est un écran du type LCD (Liquid Crystal Display).

4. Indicateur selon l'une des revendications 1 à 3, dans lequel les sources d'éclairage (5, 11) sont des diodes électroluminescentes (LED).

5. Indicateur selon l'une des revendications 1 à 4, qui est un indicateur pour tableau de bord de véhicule automobile.

## Patentansprüche

1. Anzeige mit Anzeigebildschirm (3) in einem Leuchtkasten (6) und Beleuchtungseinrichtungen (5, 11), die eingerichtet sind, um den Bildschirm (3) mit einem Umgebungslicht und mit einem Warnlicht zu beleuchten, **gekennzeichnet durch** die Tatsache, dass Umgebungsbeleuchtungseinrichtungen (5) im Leuchtkasten (6) angeordnet und Warnbeleuchtungseinrichtungen (11) nach außerhalb des Beleuchtungskastens (6) verlagert sind, um den Bildschirm (3) über einen Lichtleiter (8) zu beleuchten, wobei der Lichtleiter (8) transparent ist und ein Teil (9) sich im Leuchtkasten (6) zwischen den Umgebungsbeleuchtungseinrichtungen (5) und dem Bildschirm (3) erstreckt, wobei der Lichtleiter (8) Einrichtungen (13) aufweist, die ausgebildet sind, um das von den ausgelagerten Warnbeleuchtungseinrichtungen (11) kommende Licht gegen den Anzeigebildschirm (3) aufleuchten zu lassen.

2. Anzeige nach Anspruch 1, bei welcher die Einrichtungen, die ausgebildet sind, um das Licht aufleuchten zu lassen, eine Struktur (13) enthalten, die an der Rückseite des sich in dem Leuchtkasten (6) erstreckenden Teils (9) des Lichtleiters (8) angeordnet ist.

3. Anzeige nach einem der Ansprüche 1 oder 2, bei welcher der Anzeigebildschirm (3) ein Bildschirm von der Art LCD (Liquid Crystal Display) ist.

4. Anzeige nach einem der Ansprüche 1 bis 3, bei welcher die Beleuchtungsquellen (5, 11) Elektrolumineszenzdioden (LED) sind.

5. Anzeige nach einem der Ansprüche 1 bis 4, welche eine Anzeige für ein Armaturenbrett eines Kraftfahrzeugs ist.

## Claims

1. Indicator comprising a display screen (3) in a light box (6) and comprising light sources (5, 11) arranged to illuminate the screen (3) with an ambient light and a warning light, **characterised in that** the ambient light sources (5) are arranged in the light box (6) and the warning light sources (11) are remotely located outside the light box (6) to illuminate the screen (3) via a light guide (8), said light guide (8) being transparent and a portion (9) extending into the light box (6) between the ambient light sources (5) and the screen (3), said light guide (8) comprising means (13) which are formed to scatter light originating from the remotely located warning light sources (11) towards the display screen (3).

2. Indicator according to claim 1, wherein the means which are formed to scatter light comprise a structure (13) arranged on the rear face of the portion (9) of the light guide (8) extending into the light box (6).

3. Indicator according to either claim 1 or claim 2, wherein the display screen (3) is an LCD-type screen (liquid crystal display).

4. Indicator according to any of claims 1 to 3, wherein the light sources (5, 11) are light-emitting diodes (LEDs).

5. Indicator according to any of claims 1 to 4, which is an indicator for a motor vehicle dashboard.
